# EUROPEAN PATENT APPLICATION

(11) **EP 1 659 139 A1**
(43) Date of publication of application: **24.05.2006**
(21) Application number: 04771155.1
(22) Date of filing: 28.07.2004
(51) Int. Cl.: C08G 18/00, C08G 18/48

(54) **METHOD OF PRODUCING POLYURETHANE MOLD FOAM AND POLYURETHANE MOLD FOAM**

(30) Priority: 01.08.2003 JP 2003205351
(71) Applicant: Bridgestone Corporation, Tokyo 104-0031 (JP)
(72) Inventor: FUJITA, Taikyu, c/o Bridgestone Corporation, Yokohama-shi, Kanagawa 2440812 (JP)
(74) Representative: Whalley, Kevin
(86) International application number: PCT/JP2004/011102
(87) International publication number: WO 2005/012381

(57) **Abstract**

A method of producing polyurethane mold foam and polyurethane mold foam produced by the method are provided. With the method, the foam is formed by pouring a polyurethane foam material into a cavity shaped in a mold and foaming the material. A polyurethane foam material used as the foam material has an aspect ratio of 1 to 2.5 for a cell foamed in foam obtained free foaming.

## Description

### TECHNICAL FIELD

The present invention relates to a method of producing a molded polyurethane foam, particularly the one which excels in effective compressibility for energy absorption at the time of compression. The present invention relates also to a molded polyurethane foam produced by the method.

### BACKGROUND ART

A molded polyurethane foam includes cells elongating in the direction of gravity due to the buoyancy and growth of foam which are experienced at the time of molding. It varies in effective compressibility depending on the direction of compression. That is, it has a higher compressibility in the direction of the major axis than in the direction of the minor axis. Therefore, if it is designed for use as an energy-absorbing material, it is usually formed in such a way that cells elongate in the direction of the major axis of cells (or in the direction of gravity at the time of molding), with the direction coinciding with the direction in which the load is applied during use.

Such a molded polyurethane foam as mentioned above has a directionally unbalanced effective compressibility. In other words, it has a high effective compressibility in the direction of the major axis of cells, whereas it has an extremely low effective compressibility in the direction of the minor axis of cells. Consequently, it is poor in energy-absorbing performance when it receives compressive forces in more than one direction.

Among molded polyurethane foams used for energy absorption, a wide continuous sheet form with a large length and width relative to its thickness is usually used in such a way that loads are applied in its thickness direction. In its manufacturing process, foam cells grow in its lengthwise or widthwise direction, thereby taking on the laterally elongated shape. Thus, foam cells receive loads in the direction of their minor axis, which is undesirable for the energy-absorbing performance.

### DISCLOSURE OF INVENTION

The present invention was completed in view of the foregoing. It is an object of the present invention to provide a method of producing a molded polyurethane foam, particularly the one which excels in effective compressibility for energy absorption at the time of compression. It is another object of the present invention to provide a molded polyurethane foam produced by the method.

In order to achieve the above-mentioned object, the present inventors carried out extensive studies to find out the following. A polyurethane foam material which gives, upon free foaming, elongated cells with an aspect ratio of from 1 to 2.5 gives almost spherical cells when foamed by casting into a mold cavity. Although the cells are affected by gravity during foaming, the resulting cells are less anisotropic. That is, the resulting cells have a smaller aspect ratio (the ratio of the major axis to the minor axis). The polyurethane foam composed of such cells has improved compressibility in the direction of the minor axis. In other words, it exhibits good energy-absorbing characteristics in all directions or it resists compression in its thickness direction as well as its lengthwise and widthwise directions. This is advantageous particularly in the case where the molded polyurethane foam is used in so-called thin continuous form with a large length and width relative to its thickness such as sheet-like molded polyurethane foam. Foaming by the method according to the present invention prevents cells from growing in the lengthwise direction of cells. Therefore, cells in the resulting foam take on an almost spherical shape, with a small aspect ratio. Such cells contribute to good effective compressibility in the thickness direction of the foam, so that the foam exhibits good energy-absorbing characteristics in its thickness direction. The foregoing finding led to the present invention.

The present invention is directed to a method of producing a molded polyurethane foam by casting a polyurethane foam material into a mold cavity and foaming the polyurethane foam material, wherein the polyurethane foam material is one which gives, upon free foaming, a foam composed of cells with an aspect ratio of from 1 to 2.5. The present invention is directed also so a molded polyurethane foam produced by the above-mentioned method.

The method according to the present invention can provide a molded polyurethane foam which excels in effective compressibility, such as energy-absorbing performance in response to compression.

### BEST MODE FOR CARRYING OUT THE INVENTION

The invention will be described in more detail in the following.

The method according to the present invention is designed to produce the molded polyurethane foam from a polyurethane foam material which gives, upon free foaming, a foam composed of cells with an aspect ratio of from 1 to 2.5.

When cast into a mold cavity, the polyurethane foam material specified above gives a molded polyurethane foam which excels in effective compressibility, such as energy-absorbing characteristics. The method according to the present invention is suitable particularly for the production of a rigid polyurethane foam as an energy-absorbing material.

The term "free foaming" as used in the present invention denotes a process of casting a polyurethane foam material into a cubic container with an open top (which consists of four sides and one bottom), thereby making a foam in the container. The present invention requires that the polyurethane foam material should give, upon free foaming, a polyurethane foam composed of cells with an aspect ratio of from 1 to 2.5, preferably from 1 to 2.

The polyurethane foam material is not specifically restricted so long as the aspect ratio ration of cells formed during free foaming meets the above-mentioned requirements. For Example, the polyurethane foam material includes polyol components, foam stabilizer, catalyst, water, and isocyanate, as explained in the following.

The polyol component in the polyurethane foam material includes, for example, polyether polyol, polyester polyol, and polymer polyol. A desirable one is a mixture composed of 40 to 100 wt%, preferably 50 to 90 wt% of sucrose-based polyol, 0 to 40 wt%, preferably 0 to 20 wt%, more preferably 0 to 10 wt% of aromatic amine polyol, and 0 to 60 wt%, preferably 10 to 50 wt%, more preferably 20 to 40 wt% of aliphatic amine polyol. If the amount of sucrose-based polyol is less than 40 wt%, the resulting polyurethane foam is poor in skeleton strength and dimensional stability, and the cells tend to be formed with a high aspect ratio. Aromatic amine polyol in excess of 40 wt% results in a polyurethane foam with a high aspect ratio (due to its excessively high activity) and with poor dimensional stability (due to swelling). Also, aliphatic amine polyol in excess of 60 wt% results in a polyurethane foam with a high aspect ratio (due to its excessively high activity) and with poor dimensional stability (due to swelling).

The sucrose-based polyol includes sucrose-based polyol, the aromatic amine polyol includes TDA (tolylenediamine) polyol, and the aliphatic amine polyol includes monoethanolamine polyol.

The foam stabilizer should preferably be a silicone foam stabilizer, for example. It is commercially available under the trade names of L5340 (from Nippon Unicar Co., Ltd.), SZ1605 (from Nippon Unicar Co., Ltd.), and BY10-540 (from Dow Corning Toray Silicone Co., Ltd). The one having a surface tension equal to or larger than 22 mN/m, preferably equal to or larger than 25 mN/m, is desirable.

The amount of the foam stabilizer is not specifically restricted; it should preferably be equal to or less than 10 pbw, particularly equal to or less than 2 pbw, for 100 pbw of polyol. The lower limit of the amount of the foam stabilizer is not specifically restricted; it should be equal to or more than 0.01 pbw for 100 pbw of polyol.

The catalyst is not specifically restricted so long as it is one which is commonly used for the production of polyurethane foam. It is typified by amine catalysts such as triethylene diamine and diethanolamine. They are commercially available under the trade names of TEDA-L33, TOYOCAT-ET, and TOYOCAT-TRC (all from Tosoh Corporation). The amount of the catalyst is not specifically restricted; it should be 0.1 to 5 pbw for 100 pbw of the polyol.

The amount of water is usual amount. It is not specifically restricted; it should preferably be 0.1 to 10 pbw for 100 pbw of polyol.

The isocyanate component in the polyurethane foam material is not specifically restricted; any ordinary one may be used. It includes tolylene diisocyanate (TDI) and diphenylmethane diisocyanate (MDI) or both. MDI is preferable. It may be in the form of pure MDI (4,4'-MDI) or crude MDI. It is commercially available under the trade name of Sumidule 44V20 (crude MDI from Sumitomo Bayer Urethane Co., Ltd.).

The amount of the isocyanate component in the polyurethane foam material should preferably be such that the isocyanate index in the polyurethane foam material is 100 to 200, preferably 110 to 150.

The polyurethane foam material used in the present invention may optionally be incorporated with pigment, filler, flame retardant, age resistor, and antioxidant.

According to the present invention, the polyurethane foam material mentioned above is cast into a mold cavity in which foaming takes place. This molding method is not specifically restricted; foaming may be accomplished in the usual way, except that the rise time is 10 to 180 seconds. The rise time is specified as above so that cells are less vulnerable to gravity and other factors during foaming and are isotropic in shape (with a small ratio of the minor axis to the major axis).

The method for producing the molded polyurethane foam according to the present invention is not specifically restricted. It is suitable for the production of a sheet-like molded polyurethane foam, with its length or width larger than its thickness, which is used in such a way that loads are applied in its thickness direction. Foaming by the method according to the present invention prevents cells from growing in the lengthwise direction of cells. Therefore, cells in the resulting foam take on an almost spherical shape, with a small aspect ratio. Such cells contribute to good effective compressibility in the thickness direction of the foam.

The sheet-like molded polyurethane foam is not specifically restricted in thickness. The method according to the present invention is effective (in improvement of energy-absorbing performance in the thickness direction of the foam) when applied to sheet-like molded polyurethane foams equal to or thinner than 40 mm, which are usually composed of anisotropic cells.

The method according to the present invention may be applied not only to the above-mentioned sheet-like molded polyurethane foam but also to any molded polyurethane foam. The molded polyurethane foam includes one which varies in thickness from one place to another, and one which has partially concavity and convexity in thickness direction. The method according to the present invention is also suitable for the production of a sheet-like or rectangular molded polyurethane foam because the cells grow in its lengthwise or widthwise direction. Such foam may be defined by C/h² ≥ 2, where C denotes the projected area of the sheet-like or rectangular foam in the thickness direction coinciding with the vertical foaming direction or the direction of gravity, and h denotes the thickness of the sheet-like or rectangular foam. The method according to the present invention is suitable for the production of the sheet-like molded polyurethane foam defined above.

### EXAMPLE

In what follows, the invention will be described in more detail with reference to Examples and Comparative Examples, which are not intended to restrict the scope thereof.

### Example 1 and Comparative Examples 1 and 2

A polyurethane foam material was prepared from polyol (PPG), flame retardant, foam stabilizer, catalyst, water, filler, and crude MDI (C-MDI) according to the formation shown in Table 1. The resulting polyurethane foam material was cast into a mold cavity to give a sheet-like polyurethane foam, 250 mm long, 30 mm wide, and 10 mm thick. Foaming took place in the thickness direction which coincides with the direction of gravity. The thus obtained sample was tested for effective compressibility in the thickness direction. The results are shown in Table 1.

The polyurethane foam material was also made into a foam by free foaming. The resulting foam was tested for cell aspect ratio and effective compressibility. The results are shown in Table 1. The following methods were used to measure effective compressibility and aspect ratio and to carry out free foaming.

### Effective compressibility

Effective compressibility is defined as the compressibility which the polyurethane foam sample shows when it receives a stress 1.5 times that which is sufficient for a compressibility of 20%.

### Free foaming

Free foaming is carried out by casting the polyurethane foam material (at 23±5°C) into a cubic container, with an open top, measuring 25 cm each side.

### Aspect ratio

Aspect ratio is determined by measuring the diameter of cells constituting the polyurethane foam sample obtained by free foaming. It is defined as the ratio b/a, where a denotes the diameter measured in the horizontal direction when foaming and b denotes the diameter measured in the direction of gravity when foaming.

**Table 1**

| Components (pbw) | Example 1 | Comparative Example 1 | Comparative Example 2 |
|---|---|---|---|
| PPG | 100 | 100 | 100 |
| Flame retardant | 10 | 10 | 10 |
| Foam stabilizer (1) | 0 | 1 | 0 |
| Foam stabilizer (2) | 1 | 0 | 0 |
| Foam stabilizer (3) | 0 | 0 | 1 |
| Catalyst (1) | 1 | 1 | 1 |
| Catalyst (2) | 0.1 | 0.1 | 0.1 |
| Catalyst (3) | 0.5 | 0.5 | 0.5 |
| Water | 2 | 2 | 2 |
| Filler | 30 | 30 | 30 |
| C-MDI | Amount corresponding to the isocyanate index below | | |
| Isocyanate index | 110 | 110 | 110 |
| Aspect ratio of cells in foam obtained by free foaming | 2 | 6 | 4 |
| Effective (%) compressibility (%) | 55 | 40 | 50 |

PPG: OHV420, viscosity = 8,000 mPa·s, f = 4.1, MW = 550, composed of sucrose-based polyol 40%, TDA polyol 30%, and monoethanolamine polyol 30%.
Flame retardant: TMCPP (from Daihachi Chemical Industry Co., Ltd.)
Foam stabilizer (1): L5340 (from Nippon Unicar Co., Ltd.), with a surface tension of 21.1 mN/m (at 25°C)
Foam stabilizer (2): SZ1605 (from Nippon Unicar Co., Ltd.), with a surface tension of 26.3 mN/m (at 25°C)
Foam stabilizer (3): BY10-540 (from Dow Corning Toray Silicone Co., Ltd.), with a surface tension of 23.9 mN/m (at 25°C)
Catalyst (1): TEDA-L33 (from Tosoh Corporation)
Catalyst (2): TOYOCAT-ET (from Tosoh Corporation)
Catalyst (3): TOYOCAT-TRC (from Tosoh Corporation)
Filler: Whiten SB-red (from Shiraishi Calcium Kaisha, Ltd.)
C-MDI: Sumidule 44V20 (from Sumitomo Bayer Urethane Co., Ltd.)

## Claims

1. A method of producing a molded polyurethane foam by casting a polyurethane foam material into a mold cavity and foaming said polyurethane foam material, wherein said polyurethane foam material is one which gives, upon free foaming, a foam composed of cells with an aspect ratio of from 1 to 2.5.

2. The method of producing a molded polyurethane foam as defined in claim 1, wherein said polyurethane foam material comprises a polyol component, an isocyanate component, and a silicone foam stabilizer.

3. The method of producing a molded polyurethane foam as defined in claim 2, wherein the silicone foam stabilizer is used in an amount equal to or less than 10 pbw for 100 pbw of the polyol component.

4. The method of producing a molded polyurethane foam as defined in claim 2 or 3, wherein the polyol component comprises 40 to 100 wt% of sucrose-based polyol, 0 to 40 wt% of aromatic amine polyol, and 0 to 60 wt% of aliphatic amine polyol.

5. The method of producing a molded polyurethane foam as defined in any one of claims 1 to 4, wherein the molded polyurethane foam is a molded rigid polyurethane foam.

6. The method of producing a molded polyurethane foam as defined in any one of claims 1 to 5, wherein the molded polyurethane foam is an energy-absorbing material.

7. The method of producing a molded polyurethane foam as defined in any one of claims 1 to 6, wherein the molded polyurethane foam is a sheet-like polyurethane foam.

8. The method of producing a molded polyurethane foam as defined in claim 7, wherein the sheet-like polyurethane foam is one which has a thickness equal to or thinner than 40 mm.

9. A molded polyurethane foam which is obtained by the method defined in any one of claims 1 to 8.
